(19) Europäisches Patentamt / European Patent Office / Office européen des brevets

(11) **EP 1 841 006 A1**

(12) **EUROPEAN PATENT APPLICATION**
published in accordance with Art. 158(3) EPC

(43) Date of publication:
**03.10.2007 Bulletin 2007/40**

(51) Int Cl.:
*H01Q 1/24* (2006.01)   *H01Q 3/44* (2006.01)
*H01Q 9/38* (2006.01)   *H01Q 9/40* (2006.01)
*H01Q 19/26* (2006.01)

(21) Application number: **05793710.4**

(22) Date of filing: **12.10.2005**

(86) International application number:
**PCT/JP2005/018775**

(87) International publication number:
**WO 2006/077683 (27.07.2006 Gazette 2006/30)**

(84) Designated Contracting States:
**DE FR GB**

(30) Priority: **21.01.2005 JP 2005014114**

(71) Applicant: **MATSUSHITA ELECTRIC INDUSTRIAL CO., LTD.**
**Osaka 571-8501 (JP)**

(72) Inventors:
• **NISHIKIDO, Tomoaki**
**c/o Matsushita Electric Indstrial Co., Ltd.**
**2-1-61, Shiromi**
**Chuo-ku**
**Osaka-shi**
**Osaka 540-6207 (JP)**

• **SAITO, Yutaka**
**c/o Matsushita Electric Indstrial Co., Ltd.**
**2-1-61, Shiromi**
**Chuo-ku**
**Osaka-shi**
**Osaka 540-6207 (JP)**

• **KOYANAGI, Yoshio**
**c/o Matsushita Electric Indstrial Co., Ltd.**
**2-1-61, Shiromi**
**Chuo-ku**
**Osaka-shi**
**Osaka 540-6207 (JP)**

(74) Representative: **Schuster, Thomas**
**Grünecker, Kinkeldey, Stockmair & Schwanhäusser**
**Anwaltssozietät**
**Maximilianstrasse 58**
**80538 München (DE)**

(54) **MOBILE WIRELESS UNIT**

(57)    A portable wireless device in which, in various states where the user uses the portable wireless device, the correlation coefficient between antennas can be reduced, and high-speed and high-capacity communication can be ensured is provided.

In a portable wireless device 10, from the upper end of a case on the side opposed to a side of a display portion 37 of a case 11, a first antenna element 12 which is slightly shorter by 0.05 wavelengths than the half wavelength is placed, and a second antenna element 13 in which the element length is slightly shorter by 0.05 wavelengths than the half wavelength is placed at a predetermined gap in the width direction in parallel to the first antenna element 12. The first antenna element 12 is connected to a first shared transmitting/receiving unit 23, and the second antenna element 13 is connected to a second shared transmitting/receiving unit 24. The first antenna element 12 and a first wireless circuit portion 38 connected to the element are set as a first communication system. The second antenna element 13 and a second wireless circuit portion 39 connected to the element are set as a second communication system. The communication systems operate as wireless communication systems having low spatial correlation, respectively.

FIG. 1

EP 1 841 006 A1

**Description**

<Technical Field>

The present invention relates to a portable wireless device which is provided with a low correlation property in order to realize high-speed and high-capacity wireless communication.

<Background Art>

Recently, because of the popularization of mobile communication, it is required to construct a high-speed and high-capacity wireless communication system. As a technique for realizing this, space multiplexing transmission (MIMO: Multi-Input Multi-Output) in which communication is performed by using plural antennas in transmission and reception sides attracts attention.
The space multiplexing transmission is performed by transmitting identical space-time coded signals from plural transmission antennas in the same band, the signals are received by plural reception antennas, and information is extracted by separating the received signals.
As a result, the transfer rate is improved, and high-capacity communication is enabled.
In a future mobile wireless communication system such as a fourth generation system, application of the MIMO technique is expected. In order to realize this, an antenna configuration for a portable wireless device which is suitable for the MIMO is required.
In order to separate a space multiplexed signal in a reception side, antennas must be arranged so that the fading correlation between the antennas is sufficiently small.
In order to apply to a portable wireless device, it is important to reduce the correlation coefficient between plural antennas mounted on a portable wireless device in a state where the user uses the portable wireless device.
As a portable wireless device which corresponds to the problem, a configuration in which an antenna is placed inside each of upper and lower cases of a foldable portable wireless device to realize low correlation between the antennas is known (for example, see Patent Reference 1).
Another configuration in which a telescopic whip antenna and a built-in helical antenna are placed in an upper portion of a case of a portable wireless device to realize diversity is known (for example, see Patent Reference 2).
A further configuration in which two monopole antennas or helical antennas are placed in an upper portion of a case of a portable wireless device in the width direction of the portable wireless device, to realize diversity is known (for example, see Patent Reference 3).
In addition, when a portable wireless device is used, an omnidirectional antenna is usually used in the portable wireless device because the direction of an incoming electromagnetic wave is not limited, and a half-wavelength element is employed as the antenna.
In the portable wireless device, two half-wavelength elements are placed in an upper portion of a case.
Patent Reference 1: JP-A-3-280625
Patent Reference 2: JP-A-9-135120
Patent Reference 3: JP-A-2001-102844

<Disclosure of the Invention>

<Problems that the Invention is to Solve>

In the antennas of Patent Reference 1, however, the antenna is placed in the lower case of the portable wireless device, and, when the user uses the portable wireless device, the hand therefore covers the antenna portion, so that the antenna gain is largely impaired.
Consequently, there are problems in that the performance of high-speed and high-capacity communication is impaired, and that a circuit configuration of a wireless portion in consideration of high-speed and high-capacity transmission is not indicated.
In the antennas of Patent Reference 2, the two antennas are placed in proximity to each other, and hence the correlation coefficient between the two antennas is increased, and, when the portable wireless device is used in a tilted state, the correlation coefficient between the antennas is further increased.
Consequently, there are problems in that the performance of high-speed and high-capacity communication is impaired, and that a circuit configuration of a wireless portion in consideration of high-speed and high-capacity transmission is not indicated.
In the antennas of Patent Reference 3, the two identical antennas are placed in proximity to each other, and hence the correlation coefficient between the two antennas is increased, and, when the portable wireless device is used in a tilted state, the correlation coefficient between the antennas is further increased.

Consequently, there are problems in that the performance of high-speed and high-capacity communication is impaired, and that a circuit configuration of a wireless portion in consideration of high-speed and high-capacity transmission is not indicated.

In a portable wireless device in which two half-wavelength elements are placed in an upper portion of a case, moreover, the two antennas are placed in proximity to each other. Therefore, the correlation coefficient between the two antennas is increased, and, when the portable wireless device is used in a tilted state, the correlation coefficient between the antennas is further increased.

In a portable wireless device in which two half-wavelength elements are placed in an upper portion of a case, therefore, there is a problem in that the performance of high-speed and high-capacity communication is impaired.

The invention has been conducted in view of the above-discussed circumstances. It is an object of the invention to provide a portable wireless device in which attention is focused on phase changes of two antennas placed in the portable wireless device caused by changing slightly the element lengths of the antennas, the length of one of the two antennas is made slightly longer than the half wavelength, and that of the other antenna is made slightly shorter than the half wavelength, whereby, in various states where the user uses the portable wireless device, the correlation coefficient between the antennas can be reduced, and high-speed and high-capacity communication can be ensured.

<Means for Solving the Problems>

The portable wireless device of the invention is a portable wireless device wherein the device comprises a first antenna element and a second antenna element in a case at a predetermined gap in parallel to each other, an element length of the first antenna element is set to be slightly different from a half wavelength, an element length of the second antenna element is set to be slightly different from the element length of the first antenna element, the first antenna element and a first wireless circuit portion connected to the element are set as a first communication system, the second antenna element and a second wireless circuit portion connected to the element are set as a second communication system, and the communication systems operate as wireless communication systems having low spatial correlation, respectively.

According to the configuration, in various states where the user uses the portable wireless device, the correlation coefficient between the antennas can be reduced, and high-speed and high-capacity communication can be realized.

Moreover, a configuration may be employed wherein the first antenna element and the second antenna element are fed unbalancedly with respect to a ground potential of the case.

Furthermore, a configuration may be employed wherein the element length of one of the first antenna element and the second antenna element is made slightly longer than the half wavelength, and the element length of the other antenna element is made slightly shorter than the half wavelength.

Alternatively, the portable wireless device of the invention is a portable wireless device wherein the device comprises a first antenna element, a second antenna element, and a third antenna element in a case, an element length of the first antenna element is set to be slightly different from a half wavelength, element lengths of the second antenna element and the third antenna element are set to be slightly different from the element length of the first antenna element, the first antenna element and the second antenna element are placed at a predetermined gap in a thickness direction of the case in parallel to each other, the first antenna element and the third antenna element are placed at a predetermined gap in a width direction of the case in parallel to each other, the first antenna element and a first wireless circuit portion connected to the element are set as a first communication system, the device comprises selecting means for selecting one of the second antenna element and the third antenna element, and connecting the selected element to a second wireless circuit portion, the device comprises controlling means for controlling the selecting means, the selected one antenna element and the second wireless circuit portion connected to the element are set as a second communication system, and the first communication system and the second communication system operate as wireless communication systems having low spatial correlation, respectively.

According to the configuration, in various states where the user uses the portable wireless device, the correlation coefficient between the antennas can be reduced, and high-speed and high-capacity communication can be realized.

Furthermore, a configuration may be employed wherein the element length of one of the first antenna element, and the second antenna element and the third antenna element is made slightly longer than the half wavelength, and the element length of the other antenna element is made slightly shorter than the half wavelength.

The portable wireless device of the invention is a portable wireless device wherein a first case and a second case are swingably coupled to each other by a hinge portion, the device comprises a first plate-like conductor along a long case side of the first case, the device comprises a second plate-like conductor and a third plate-like conductor along the case long side of the first case while being separated from the first plate-like conductor in the first case, a conductor length of the first plate-like conductor is set to be slightly different from a half wavelength, a conductor length of the second plate-like conductor is set to be slightly different from the conductor length of the first plate-like conductor,

a conductor length of the third plate-like conductor is set to be slightly different from the conductor length of the second plate-like conductor, the device comprises a ground pattern on a circuit board disposed in the second case, the device comprises selecting means for selecting one set of the first plate-like conductor and the second plate-like conductor, the first plate-like conductor and the third plate-like conductor, and the second plate-like conductor and the third plate-like conductor, the device comprises controlling means for controlling the selecting means, one plate-like conductor of the selected set, and a first wireless circuit portion connected to the conductor are set as a first communication system, another plate-like conductor and a second wireless circuit portion connected to the conductor are set as a second communication system, and the communication systems operate as wireless communication systems having low spatial correlation, respectively.

According to the configuration, a built-in antenna can be configured in a range where the designability of the portable wireless device is not impaired, the correlation coefficient between the antennas can be reduced in various states where the user uses the portable wireless device, and high-speed and high-capacity communication can be realized.

Furthermore, a configuration may be employed wherein the conductor length of one of the first plate-like conductor and the second plate-like conductor, and the third plate-like conductor is set to be slightly longer than the half wavelength, and the conductor length of the other conductor is set to be slightly shorter than the half wavelength.

Furthermore, a configuration may be employed wherein, as the controlling means for controlling the selecting means, the device comprises tilt detecting means for detecting a tilt angle of the portable wireless device, and the selecting means is controlled in accordance with a detection result of the tilt detecting means.

Furthermore, a configuration may be employed wherein the plate-like conductor which is not selected by the selecting means is short-circuited to the circuit board via a circuit having a specific reactance component.

Effect of the Invention

The invention can attain an effect that the length of one of two antennas placed in the width direction of a portable wireless device is made slightly longer than the half wavelength, and that of the other antenna is made slightly shorter than the half wavelength, whereby, in various states where the user uses the portable wireless device, the correlation coefficient between the antennas can be reduced, and high-speed and high-capacity communication can be ensured.

<Brief Description of the Drawings>

Fig. 1 is a basic diagram showing a portable wireless device of a first embodiment of the invention.
Fig. 2 is a basic diagram showing a portable wireless device of a comparative example.
Fig. 3(a) is a graph showing a phase change of the portable wireless device of the first embodiment, and Fig. 3(b) is a graph showing a phase change of the comparative example.
Fig. 4 is a view showing a communication state of the portable wireless device.
Fig. 5 is a view showing an operation state of the portable wireless device.
Fig. 6 is a basic diagram showing a portable wireless device of a second embodiment of the invention.
Fig. 7 is a diagram showing an example in which the portable wireless device of the second embodiment is tilted.
Fig. 8 is a diagram showing another example in which the portable wireless device of the second embodiment is tilted.
Fig. 9(a) is a basic diagram showing a portable wireless device of a third embodiment of the invention, and Fig. 9 (b) is a sectional view of Fig. 9(a) taken along the line A-A.

<Description of Reference Numerals and Signs>

| 10, 40, 60 | portable wireless device |
|---|---|
| 11 | case |
| 12, 13, 41, 42, 43 | antenna element |
| 15, 16, 44, 45, 46, 74, 75, 76 | feeding point |
| 17, 18, 47, 48, 49, 71, 72, 73 | matching circuit |
| 19, 67 | ground plate (circuit board) |
| 19a, 67a | ground pattern |
| 21, 22 | transmitting circuit |

| 23, 24 | shared transmitting/receiving unit |
|---|---|
| 26, 27 | receiving circuit |
| 28 | demodulating portion |
| 37, 68 | display portion |
| 38 | first wireless circuit portion |
| 39 | second wireless circuit portion |
| 50, 80 | high-frequency switch (selecting means) |
| 51 | controlling portion |
| 52, 53, 82, 83, 84 | terminating circuit |
| 54 | gravity sensor (controlling means) |
| 61 | upper case (first case) |
| 62 | lower case (second case) |
| 63 | hinge portion |
| 64, 65, 66 | plate-like conductor (radiation conductor) |
| 77, 78, 79 | feeder line |

| G1, G3 to G6 | gap |
|---|---|
| L1 to L6 | element length |
| L7 to L9 | conductor length |

<Best Mode for Carrying Out the Invention>

Hereinafter, first to third embodiments of a portable wireless device of an embodiment of the invention will be described while setting the operating frequency to, for example, 2.15 GHz.

(First embodiment)

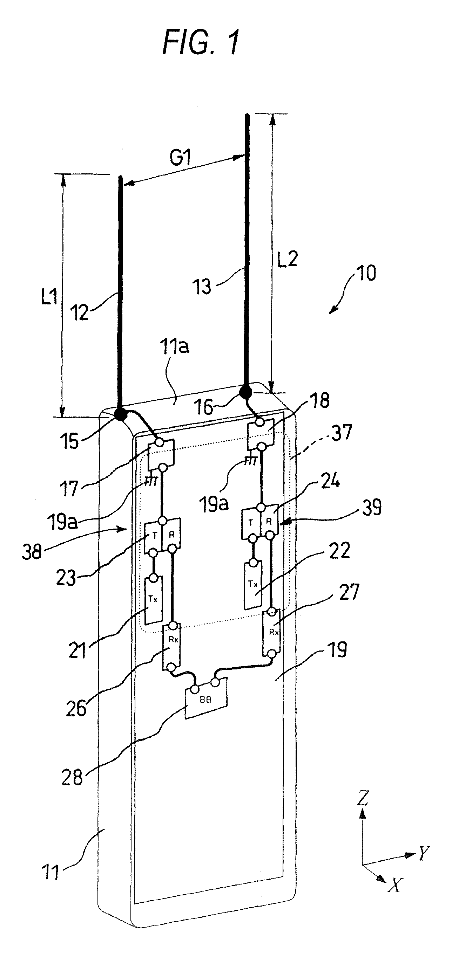

A portable wireless device 10 of the first embodiment shown in Fig. 1 comprises a case 11, and a first antenna element 12 and a second antenna element 13 on a top portion 11a of the case 11.

The case 11 is formed by a resin material which is an insulator, into a shape in which, for example, the length is 120 mm, the width is 50 mm, and the depth in the thickness direction is about 15 mm.

The first antenna element 12 is a conductive element which is configured by, for example, a copper wire having an element length L1 of 63 mm and a diameter of 1 mm. At the set frequency of 2.15 GHz, the first antenna element 12 is slightly shorter by about 0.05 wavelengths than the half wavelength of 70 mm, and, for example, placed outside in the same direction (i.e., the direction perpendicular to the upper face of the case) as the longitudinal direction of the case 11, from an edge of an upper portion of the case on the side opposed to the side of a display portion 37.

The second antenna element 13 is a conductive element which is configured by, for example, a copper wire having an element length L2 of 77 mm and a diameter of 1 mm. At the frequency of 2.15 GHz, the second antenna element 13 is slightly shorter by about 0.05 wavelengths than the half wavelength of 70 mm, and, for example, placed on the side opposed to the side of the display portion 37 in parallel to the first antenna element 12 so that the gap G1 with respect to the first antenna element 12 is, for example, 45 mm.

A first feeding point 15 and a second feeding point 16 are disposed in lower portions of the first antenna element 12 and the second antenna element 13, respectively. The first feeding point 15 and the second feeding point 16 are electrically connected to a first matching circuit 17 and a second matching circuit 18 in the case 11, respectively.

The ground potentials of the first matching circuit 17 and the second matching circuit 18 are grounded to a ground pattern 19a on a ground plate 19.

The first matching circuit 17 and the second matching circuit 18 exert a function of matching the impedances of the first antenna element 12 and the second antenna element 13 to the circuit impedance (usually, 50 $\Omega$).

Identical space-time coded signals are amplified by respective first and second transmitting circuits 21, 22. The first transmitting circuit 21 feeds the first matching circuit 17 via a first shared transmitting/receiving unit (duplexer) 23 for enabling one antenna to be shared in transmission and reception. The second transmitting circuit 22 feeds the second matching circuit 18 via a second shared transmitting/receiving unit 24.

A receiving signal is amplified by a first receiving circuit 26 and a second receiving circuit 27 via the first shared transmitting/receiving unit 23 and the second shared transmitting/receiving unit 24, and separated by a demodulating portion 28, whereby reception information is extracted.

The first matching circuit 17, the first transmitting circuit 21, the first shared transmitting/receiving unit 23, the first receiving circuit 26, and the like constitute a first wireless circuit portion 38.

The second matching circuit 18, the second transmitting circuit 22, the second shared transmitting/receiving unit 24, the second receiving circuit 27, and the like constitute a second wireless circuit portion 39.

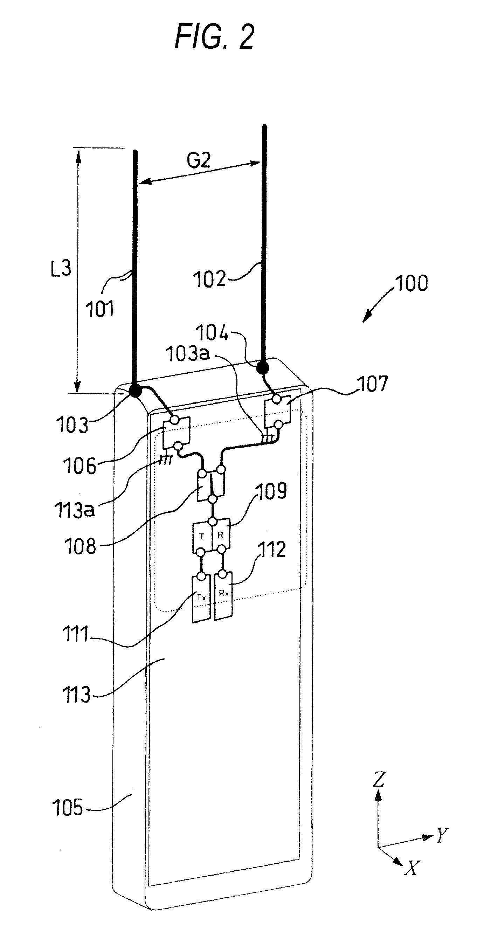

Next, the antenna operation of the portable wireless device 10 of the first embodiment will be described in contrast to a portable wireless device 100 of a comparative example shown in Fig. 2.

Here, in order to realize high-speed and high-capacity communication, wireless communication systems having low spatial correlation are required. In order to realize wireless communication systems having low spatial correlation, the correlation coefficient between antennas must be reduced.

As an index for evaluating the correlation property of an antenna of a portable wireless device, the following theoretical expression is usually used. Theoretical expression (1) of a correlation coefficient (pe) of two antennas is described in the Transactions of the Institute of Electronics, Information and Communication Engineers (B-11, Vol. J73-B-11, No. 12, pp. 883-895).

In the case of Fig. 1, for example, the correlation coefficient is given by theoretical expression (1) in a state where the tip ends of the antennas of the portable wireless device are directed in the direction of the zenith (Z).

[Exp. 1]

$$\rho_e = \frac{\left| \int_0^{2\pi}\int_0^{\pi} \left[ XPR \cdot E_{\theta1} \cdot E_{\theta2}^* \cdot P_\theta + E_{\phi1} \cdot E_{\phi2}^* \cdot P_\phi \right] d\Omega \right|^2}{\int_0^{2\pi}\int_0^{\pi} \left[ XPR \cdot E_{\theta1} \cdot E_{\theta1}^* \cdot P_\theta + E_{\phi1} \cdot E_{\phi1}^* \cdot P_\phi \right] d\Omega \times \int_0^{2\pi}\int_0^{\pi} \left[ XPR \cdot E_{\theta2} \cdot E_{\theta2}^* \cdot P_\theta + E_{\phi2} \cdot E_{\phi2}^* \cdot P_\phi \right] d\Omega}$$

In Exp. (1),

$E_{\theta1}$ and $E_{\phi1}$ are complex field directivities of the θ polarization component of an antenna 1,
$E_{\theta2}$ and $E_{\phi2}$ are complex field directivities of the θ polarization component of an antenna 2,
$P_\theta(\theta, \phi)$ and $P_{(\phi)}(\theta, \phi)$ are angular density functions of θ and φ components of an incoming wave entering an antenna, and
XPR is a cross-power ratio of an incoming wave entering an antenna, or a power ratio of the vertical polarization component to the horizontal polarization component.

It is known that, in a multiple wave environment of mobile communication, a usual cross-polarization power ratio XPR is 4 to 9 dB. This is calculated on the assumption that the vertical polarization component of an incoming wave is higher by 4 to 9 dB than the horizontal polarization component.

In the radiation pattern of an antenna, therefore, the vertical polarization component is weighted by XPR. Hereinafter, description is made while 6 dB which is a usual value in an urban area is used as XPR.

Furthermore, it is known that an average elevation angle of an incoming wave in an urban area exists in a range of 0° to 30° or a substantially horizontal range. Here, description is made on the basis of a result of a calculation in which the average elevation angle 0° and the standard deviation indicating the spread of an incoming wave is set to 20°.

Usually, the target of the correlation coefficient is 0.6 or less. In a low-correlation configuration wherein the coefficient is close to 0°, higher-speed and higher-capacity communication can be realized.

The portable wireless device 100 of the comparative example shown in Fig. 2 is identical with that described in the paragraph of the prior art. In the portable wireless device 100, a first antenna element 101 and a second antenna element 102 have an element length L3 of 70 mm, and a gap G2 between the first antenna element 101 and the second antenna element 102 is set to 45 mm.

The element lengths of the first antenna element 101 and the second antenna element 102 are the half wavelength at the set frequency, and the elements operate as half-wavelength monopole antennas. The vertical polarization component in the horizontal plane is substantially omnidirectional.

A first feeding point 103 and a second feeding point 104 are disposed in lower portions of the first antenna element 101 and the second antenna element 102, respectively.

The first feeding point 103 and the second feeding point 104 are connected to a high-frequency switch 108 via a first matching circuit 106 and a second matching circuit 107 in a case 105, and to a transmitting circuit 111 and a receiving circuit 112 via a shared transmitting/receiving unit 109.

The ground potentials of the first matching circuit 106 and the second matching circuit 1107 are grounded to a ground pattern 113a on a ground plate 113.

First, description will be made on the case where the portable wireless device 10 of the first embodiment and the portable wireless device 100 of the comparative example are placed so that the tip ends of the antenna elements 12, 13, 101, 102 are upward directed in the Z direction as shown in Figs. 1 and 2.

In the portable wireless device 100 of the comparative example, the gap G2 between the first antenna element 101 and the second antenna element 102 is 45 mm. In this case, the correlation coefficient is 0.21.

By contrast, in the portable wireless device 10 of the first embodiment, attention is focused on phase changes of the antennas 12, 13 caused by slightly changing the element lengths L1, L1 of the first antenna element 12 and the second antenna element 13, and a configuration in which the first antenna element 12 is shorter by 0.05 wavelengths than the half wavelength, and the second antenna element 13 is longer by 0.05 wavelengths than the half wavelength is formed, whereby, as compared with the portable wireless device 100 of the comparative example, the correlation coefficient is reduced by about 0.1, or to 0.12, with the result that lower correlation can be realized.

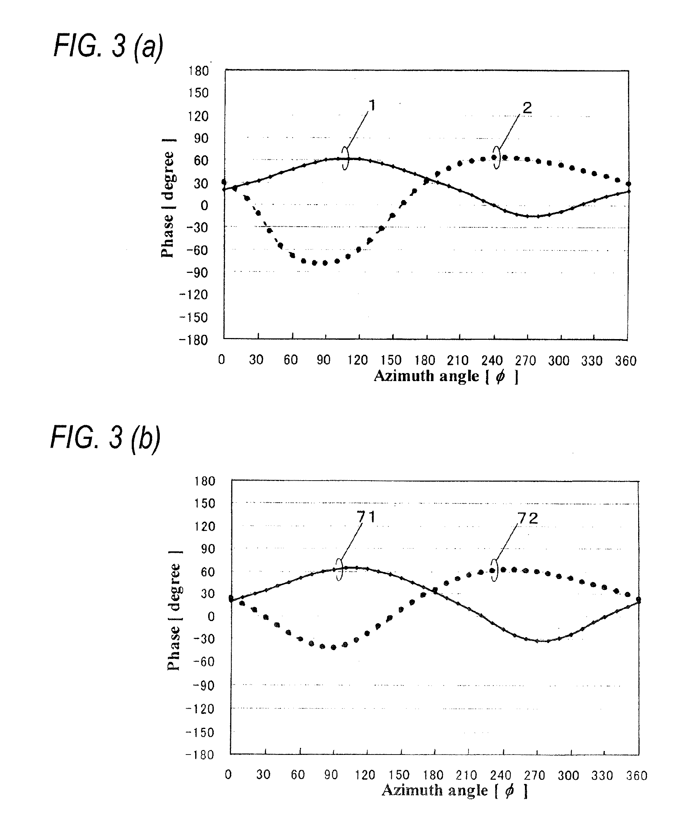

A cause of this low correlation will be described with reference to the graphs of a phase change shown in Figs. 3(a) and 3(b).

Fig. 3(a) shows phase changes of the vertical polarization components of the antenna elements 12, 13 in the horizontal plane (XY plane) of the coordinate system shown in Fig. 1, and Fig. 3(b) shows phase changes of the vertical polarization components of the antenna elements 101, 102 in the horizontal plane (XY plane) of the coordinate system shown in Fig. 2.

As shown in the phase change graphs of Figs. 3(a) and 3(b), the phase changes of the first antenna element 12 and the second antenna element 13 of the first embodiment in which the antenna element lengths are slightly changed are made larger as compared with the phase changes of the first antenna element 101 and the second antenna element 102 of the comparative example.

Namely, attention is focused on phase changes of the first antenna element 12 and the second antenna element 13, the phase changes are made large by slightly changing the antenna element lengths, and it is possible to deem that the spatial phase difference can be made large, whereby low correlation between the antennas is realized.

Since the element lengths of the first antenna element 12 and the second antenna element 13 are slightly different from the half wavelength, the radiation pattern is substantially identical with that of a half-wavelength element. The vertical polarization component in the horizontal plane is substantially omnidirectional, and an effect due to the slight changes of the antenna elements 12, 13 is not observed.

As described above, the correlation coefficient between the first antenna element 12 and the second antenna element 13 is suppressed to be low or to 0.12, and, in the case of transmission, space multiplexing is performed by transmitting identical space-time coded signals from the first antenna element 12 and the second antenna element 13 in the same band.

In the case of reception, similarly, the first antenna element 12 and the second antenna element 13 receive signals, and information is extracted by separating the received signals.

According to the configuration, the embodiment operates as wireless communication systems having low spatial correlation, whereby the transfer rate is improved, and high-capacity communication is enabled.

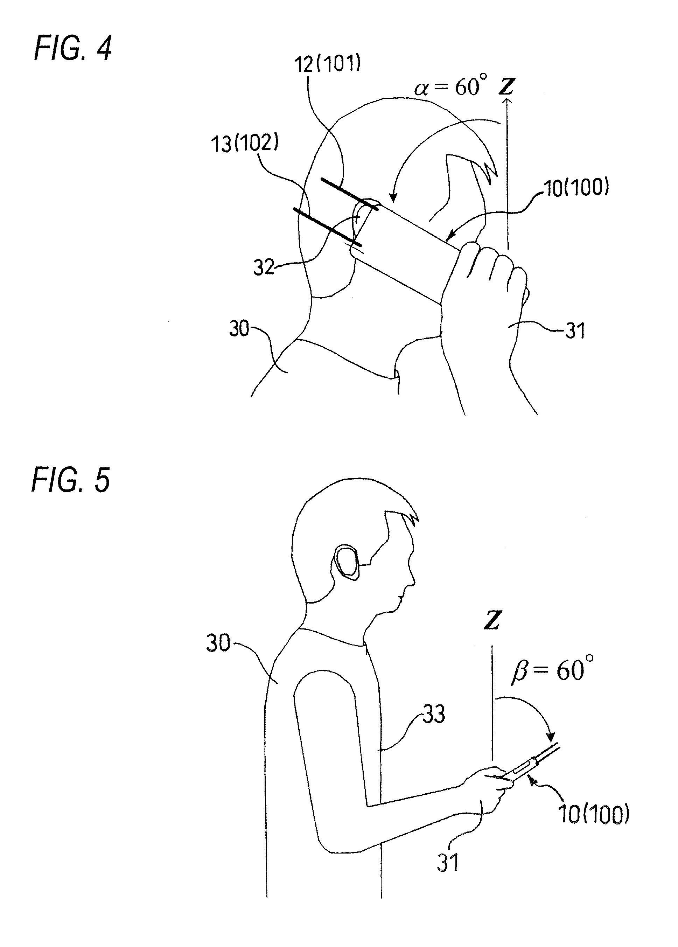

Next, as shown in Fig. 4, in a communication state where the user 30 uses the portable wireless device 10, 100 while the device is held by the hand 31 in proximity to the ear 32, a state where the portable wireless device 10, 100 is tilted by $\alpha$ (60˚) toward the Y direction from the Z-axis in the coordinate system shown in Fig. 1 or 2 is obtained.

In this case, the correlation coefficient in the portable wireless device 100 of the comparative example is 0.37.

By contrast, in the portable wireless device 10 of the first embodiment, the configuration in which the first antenna element 12 is shorter by 0.05 wavelengths than the half wavelength, and the second antenna element 13 is longer by 0.05 wavelengths than the half wavelength is formed, whereby, as compared with the portable wireless device 100 of the comparative example, the correlation coefficient is reduced by about 0.2, or to 0.15, with the result that lower correlation can be realized.

A cause of this low correlation is as follows. As compared with the phase changes of the first antenna element 101 and the second antenna element 102, those of the first antenna element 12 and the second antenna element 13 are large. Therefore, the spatial phase difference of the first antenna element 12 and the second antenna element 13 is large, and low correlation between the antennas can be realized.

As described above, the correlation coefficient between the first antenna element 12 and the second antenna element 13 is suppressed to be low or to 0.15, and, in the case of transmission, space multiplexing is performed by transmitting identical space-time coded signals from the first antenna element 12 and the second antenna element 13 in the same band.

In the case of reception, similarly, the first antenna element 12 and the second antenna element 13 receive signals, and information is extracted by separating the received signals.

According to the configuration, the embodiment operates as wireless communication systems having low spatial correlation, whereby the transfer rate is improved, and high-capacity communication is enabled.

Next, as shown in Fig. 5, in an operation state where the user 30 places the portable wireless device 10, 100 in front of the chest 33 while the device is held by the hand 31, and the user performs an e-mail operation, an internet connection, or a use of a video phone, a state where the portable wireless device 10, 100 is tilted by β (60˚) toward the -X direction from the Z-axis in the coordinate system shown in Fig. 1 or 2 is obtained.

In this case, the correlation coefficient in the portable wireless device 100 of the comparative example is 0.10.

By contrast, in the portable wireless device 10 of the first embodiment, the configuration in which the first antenna element 12 is shorter by 0.05 wavelengths than the half wavelength, and the second antenna element 13 is longer by 0.05 wavelengths than the half wavelength is formed, whereby, as compared with the portable wireless device 100 of the comparative example, the correlation coefficient is reduced by about 0.08, or to 0.02, with the result that low correlation can be further realized.

A cause of this low correlation is as follows. As compared with the phase changes of the first antenna element 101 and the second antenna element 102, those of the first antenna element 12 and the second antenna element 13 are large. Therefore, the spatial phase difference of the first antenna element 12 and the second antenna element 13 is large, and low correlation between the antennas can be realized.

As described above, the correlation coefficient between the first antenna element 12 and the second antenna element 13 is suppressed to be low or to 0.02, and, in the case of transmission, space multiplexing is performed by transmitting identical space-time coded signals from the first antenna element 12 and the second antenna element 13 in the same band.

In the case of reception, similarly, the first antenna element 12 and the second antenna element 13 receive signals, and information is extracted by separating the received signals.

According to the configuration, the embodiment operates as wireless communication systems having low spatial correlation, whereby the transfer rate is improved, and high-capacity communication is enabled.

As described above, the portable wireless device 10 of the first embodiment can provide a portable wireless device wherein the element length L2 of one of the two antenna elements 12, 13 placed in the width direction of the portable wireless device 10 is made slightly longer than the half wavelength, and the element length L1 of the other element is made slightly shorter than the half wavelength, whereby, in various states where the user 30 uses the portable wireless device 10, the correlation coefficient between the antennas can be reduced, and high-speed and high-capacity communication can be ensured.

In the first embodiment, the structure of the straight type portable wireless device 10 which is not divided into upper and lower cases has been described. Also in a foldable portable wireless device which is divided into upper and lower cases, when the two antenna elements 12, 13 are similarly placed in an upper portion of the case, it is possible to attain the same effects.

Also when the two antenna elements 12, 13 are placed in a hinge portion, it is possible to attain the same effects.

In the first embodiment, the two antenna elements 12, 13 are changed by setting about 0.05 wavelengths with respect to the half wavelength. However, the invention is not restricted to this length. Any length may be used as far as it is adjusted so as to realize correlation lower than that of a half-wavelength element.

In the first embodiment, the antenna elements 12, 13 are placed outside the case 11. However, the invention is not restricted to this. Also when the antenna elements are placed in positions which are inside the case 11, and which do not impair the radiation property, for example, in an end of the case 11, it is possible to attain the same effects.

The first embodiment has been described as the configuration in which the antenna elements 12, 13 are monoploes and fed unbalancedly. However, the invention is not restricted to this. Even when a configuration in which a balanced feed is performed is employed, low correlation can be realized as far as the element lengths L1, L2 of the two elements 12, 13 are different from each other and slightly differ from the half wavelength.

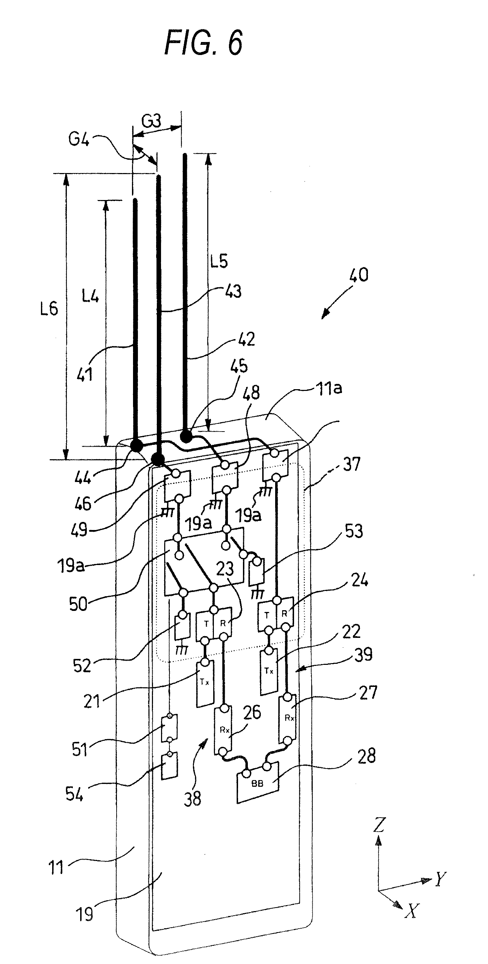

Next, a second embodiment and a third embodiment will be described with reference to Figs. 6 to 9. In the second embodiment and the third embodiment, members which are identical with or similar to those of the portable wireless device 10 of the first embodiment are denoted by the same reference numerals, and their description is omitted.

(Second embodiment)

A portable wireless device 40 of the second embodiment will be described with reference to Figs. 6 to 8.

The portable wireless device 40 of the second embodiment shown in Fig. 6 comprises the case 11, and a first antenna element 41, a second antenna element 42, and a third antenna element 43 on the top portion 11 a of the case 11.

The first antenna element 41 is a conductive element which is configured by, for example, a copper wire having an element length L4 of 63 mm and a diameter of 1 mm. At the set frequency of 2.15 GHz, the first antenna element 41 is slightly shortened by about 0.05 wavelengths with respect to the half wavelength of 70 mm, and, for example, placed outside in the same direction (i.e., the direction perpendicular to the upper face of the case) as the longitudinal direction of the case 11, from an edge of the top portion 11 a on the side opposed to the side of the display portion 37.

The second antenna element 42 is a conductive element which is configured by, for example, a copper wire having an element length L5 of 77 mm and a diameter of 1 mm. At the set frequency of 2.15 GHz, the second antenna element 42 is slightly shortened by about 0.05 wavelengths with respect to the half wavelength of 70 mm, and, for example, placed on the side opposed to the side of the display portion 37 in parallel to the first antenna element 41 so that the gap G3 with respect to the first antenna element 41 is, for example, 12 mm.

The third antenna element 43 is a conductive element which is configured by, for example, a copper wire having an element length L6 of 77 mm and a diameter of 1 mm. At the set frequency of 2.15 GHz, the third antenna element 43 is slightly elongated by about 0.05 wavelengths with respect to the half wavelength of 70 mm, and, for example, placed in the edge on the side of the display portion 37 in parallel to the first antenna element 41 so that the gap G4 with respect to the first antenna element 41 is, for example, 12 mm.

A first feeding point 44, a second feeding point 45, and a third feeding point 46 are disposed in lower portions of the first antenna element 41, the second antenna element 42, and the third antenna element 43, respectively. The first feeding point 44, the second feeding point 45, and the third feeding point 46 are electrically connected to a first matching circuit 47, a second matching circuit 48, and a third matching circuit 49 in the case 11, respectively.

The ground potentials of the first matching circuit 47, the second matching circuit 48, and the third matching circuit 49 are grounded to the ground pattern 19a on the ground plate 19.

The first matching circuit 47, the second matching circuit 48, and the third matching circuit 49 exert a function of matching the impedances of the first antenna element 41, the second antenna element 42, and the third antenna element 43 to the circuit impedance (usually, 50 $\Omega$).

Identical space-time coded signals are amplified by the respective first and second transmitting circuits 21, 22. The second transmitting circuit 22 feeds the first matching circuit 47 via the second shared transmitting/receiving unit (duplexer) 24 for enabling one antenna to be shared in transmission and reception.

The first transmitting circuit 21 feeds the second matching circuit 48 or the third matching circuit 49 via the first shared transmitting/receiving unit 23 and a high-frequency switch 50.

The high-frequency switch 50 is configured by, for example, an FET or a PIN diode, and, in response to a control signal from a controlling portion 51, selects one of the second matching circuit 48 and the third matching circuit 49, as a circuit to be fed.

The other one of the second and third matching circuits 48, 49 which is not fed is connected to a first terminating circuit 52 or a second terminating circuit 53.

The first terminating circuit 52 and the second terminating circuit 53 have a fixed impedance, and are configured by a specific reactance element or resistor, and the like, and grounded to the ground pattern 19a on the ground plate 19.

The controlling portion 51 produces a signal for controlling the high-frequency switch 50, in accordance with angle information from a gravity sensor 54 which detects the tilt angle of the portable device. For example, a gyro sensor is used as the gravity sensor 54. The gravity sensor detects the tilt of portable wireless device 40.

A receiving signal is amplified by the first receiving circuit 26 and the second receiving circuit 27 via the first shared transmitting/receiving unit 23 and the second shared transmitting/receiving unit 24, and separated by the demodulating portion 28, whereby reception information is extracted.

Next, the antenna operation of the portable wireless device 40 of the second embodiment will be described.

First, description will be made on the case where the portable wireless device 40 of the second embodiment is placed so that the tip ends of the first antenna element 41, the second antenna element 42, and the third antenna element 43 are upward directed in the Z direction as shown in Fig. 6.

The gap G3 between the first antenna element 41 and the second antenna element 42 is 12 mm. In the case where the lengths of antenna elements are the half wavelength, for example, the correlation coefficient is 0.55. By contrast, in a configuration in which, as the portable wireless device 40 of the second embodiment, the element length of the first antenna element 41 is shortened by 0.05 wavelengths with respect to the half wavelength, and the element length of the second antenna element 42 is elongated by 0.05 wavelengths with respect to the half wavelength, the correlation coefficient can be reduced by about 0.1 or to 0.40 as compared with a half-wavelength configuration, with the result that low correlation can be further realized.

On the other hand, the gap G4 between the first antenna element 41 and the third antenna element 43 is 12 mm. In the case where the lengths of antenna elements are the half wavelength, for example, the correlation coefficient is 0.55. By contrast, in a configuration in which, as the portable wireless device 40 of the second embodiment, the element length of the first antenna element 41 is shortened by 0.05 wavelengths with respect to the half wavelength, and the element length of the third antenna element 43 is elongated by 0.05 wavelengths with respect to the half wavelength, the correlation coefficient can be reduced by about 0.1 or to 0.40 as compared with a half-wavelength configuration, with the result that low correlation can be further realized.

In this case, therefore, the high-frequency switch 50 may select any one of the second antenna element 42 and the third antenna element 43. Here, it is assumed that, for example, the second antenna element 42 is selected.

The lengths L4, L5, L6 of the first antenna element 41, the second antenna element 42, and the third antenna element 43 are slightly different from the half wavelength. Therefore, the radiation pattern is substantially identical with that of a half-wavelength element, and the vertical polarization component in the horizontal plane is substantially omnidirectional.

Based on a detection result of the gravity sensor 54 which detects the tilt angle of the portable wireless device 40, it is determined that the tilt angle is 0˚, and the detection result is sent to the controlling portion 51. On the basis of the detection result, the controlling portion 51 sends the control signal to the high-frequency switch 50.

Based on the control signal, the high-frequency switch 50 operates, so that the first shared transmitting/receiving unit 23 is connected to the second matching circuit 48 for the second antenna element 42, and the first terminating circuit 52 is connected to the third matching circuit 49 for the third antenna element 43.

In this case, when the impedance of the first terminating circuit 52 is set to 50 Ω, for example, low correlation is obtained.

As described above, the element length L4 of the first antenna element 41 is shortened by 0.05 wavelengths with respect to the half wavelength, the element length L5 of the second antenna element 42 is elongated by 0.05 wavelengths with respect to the half wavelength, and the high-frequency switch 50 is switched over, whereby the correlation coefficient between the first antenna element 41 and the second antenna element 42 is suppressed to be low or to 0.40.

In the case of transmission, space multiplexing is performed by transmitting identical space-time coded signals from the first antenna element 41 and the second antenna element 42 in the same band.

In the case of reception, similarly, the first antenna element 41 and the second antenna element 42 receive signals, and information is extracted by separating the received signals.

According to the configuration, the embodiment operates as wireless communication systems having low spatial correlation, whereby the transfer rate is improved, and high-capacity communication is enabled.

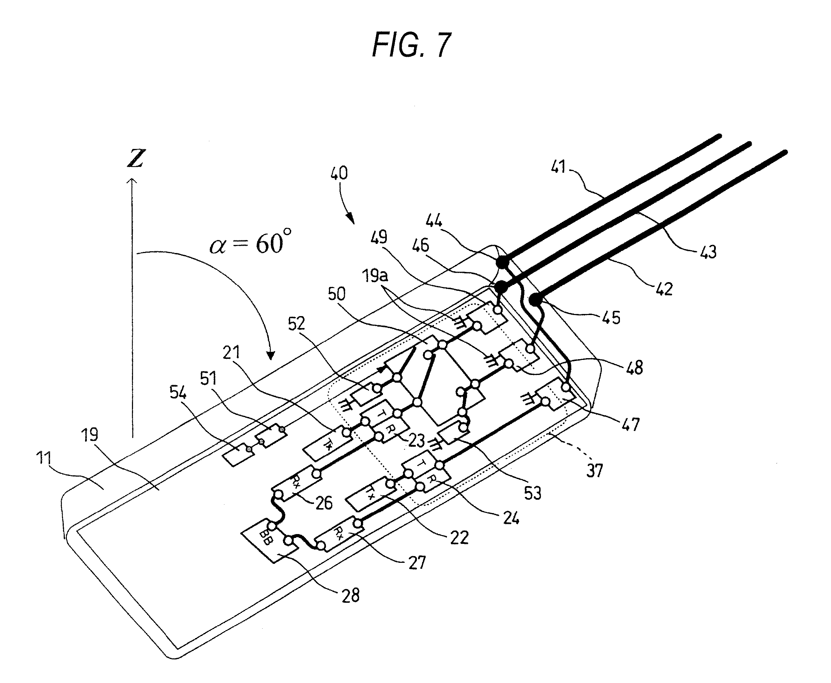

Next, in the case where the portable wireless device 40 is tilted as shown in Fig. 7 (i.e., the case where the device is tilted by $\alpha$ (60˚) toward the Y direction from the Z-axis in the coordinate system shown in Fig. 6), the correlation coefficient between the first antenna element 41 and the second antenna element 42 is 0.55 or higher than the case where the device is not tilted. Namely, the effect of high-speed and high-capacity communication is reduced.

However, the portable wireless device 40 of the second embodiment has the configuration in which the element length L4 of the first antenna element 41 is shortened by 0.05 wavelengths with respect to the half wavelength, and the element length L5 of the second antenna element 42 is elongated by 0.05 wavelengths with respect to the half wavelength. As compared with a half-wavelength configuration, therefore, the correlation coefficient is reduced by about 0.2 or to 0.55, and low correlation is obtained.

Hereinafter, a cause of the phenomenon that the correlation coefficient is made higher in the case where the portable wireless device 40 is tilted as shown in Fig. 7 (Fig. 5(a)) will be described.

In the case where the portable wireless device 40 is tilted, since it is assumed that an electromagnetic wave comes from a substantially horizontal direction (XY plane), the positional relationships of the first antenna element 41 and the second antenna element 42 from the far field are estimated to be identical with each other in the maximum gain direction (X direction) of the first antenna element 41 and the second antenna element 42.

Namely, the differences in spatial position (phase differences) are substantially equal to each other, and the correlation property is made higher.

By contrast, the correlation coefficient between the first antenna element 41 and the third antenna element 43 is 0.34, and low correlation is obtained.

In the portable wireless device 40 of the second embodiment, however, the element length L4 of the first antenna element 41 is shortened by 0.05 wavelengths with respect to the half wavelength, and the element length L6 of the third antenna element 43 is elongated by 0.05 wavelengths with respect to the half wavelength. As compared with a half-wavelength configuration, therefore, the correlation coefficient is reduced by about 0.2 or to 0.34, and low correlation is obtained.

Hereinafter, a cause of the phenomenon that the correlation coefficient is made lower in the case where the portable wireless device 40 is tilted as shown in Fig. 7 will be described.

In the case where the portable wireless device 40 is tilted, since it is assumed that an electromagnetic wave comes from a substantially horizontal direction (XY plane), the positional relationships of the first antenna element 41 and the third antenna element 43 from the far field are estimated to be different from each other in the maximum gain direction (X direction) of the first antenna element 41 and the third antenna element 43.

Namely, the differences in spatial position (phase differences) are estimated to be different from each other, and the correlation property can be suppressed to be low.

When the portable wireless device 40 is tilted as shown in Fig. 7, therefore, the gravity sensor 54 which detects the tilt angle of the portable wireless device 40 detects the tilt in the Y direction, and sends the detection result to the controlling portion 51. On the basis of the detection result, the controlling portion 51 sends the control signal to the high-frequency switch 50. Based on the control signal, the high-frequency switch 50 operates, so that the first shared transmitting/receiving unit 23 is connected to the third matching circuit 49 for the third antenna element 43, and the second terminating circuit 53 is connected to the second matching circuit 48 for the second antenna element 42.

In this case, when the impedance of the second terminating circuit 53 is set to 50 Ω, for example, low correlation is obtained.

As described above, the element length L4 of the first antenna element 41 is shortened by 0.05 wavelengths with respect to the half wavelength, the element length L6 of the third antenna element 43 is elongated by 0.05 wavelengths with respect to the half wavelength, and the high-frequency switch 50 is switched over, whereby the correlation coefficient between the first antenna element 41 and the third antenna element 43 is suppressed to be low or to 0.34.

In the case of transmission, space multiplexing is performed by transmitting identical space-time coded signals from the first antenna element 41 and the third antenna element 43 in the same band.

In the case of reception, similarly, the first antenna element 41 and the third antenna element 43 receive signals, and information is extracted by separating the received signals.

According to the configuration, the embodiment operates as wireless communication systems having low spatial correlation, whereby the transfer rate is improved, and high-capacity communication is enabled.

The tilt angle of the portable wireless device 40 is substantially equal to that in the communication state where, for example, the user 30 uses the portable wireless device 40 while the device is held by the hand 31 in proximity to the ear 32 as shown in Fig. 4.

Namely, also in the communication state, the tilt angle of the portable wireless device 40 is detected, and the first antenna element 41 and the third antenna element 43 are selected, whereby the correlation between the antennas is made low, the transfer rate is improved, and high-capacity communication is enabled.

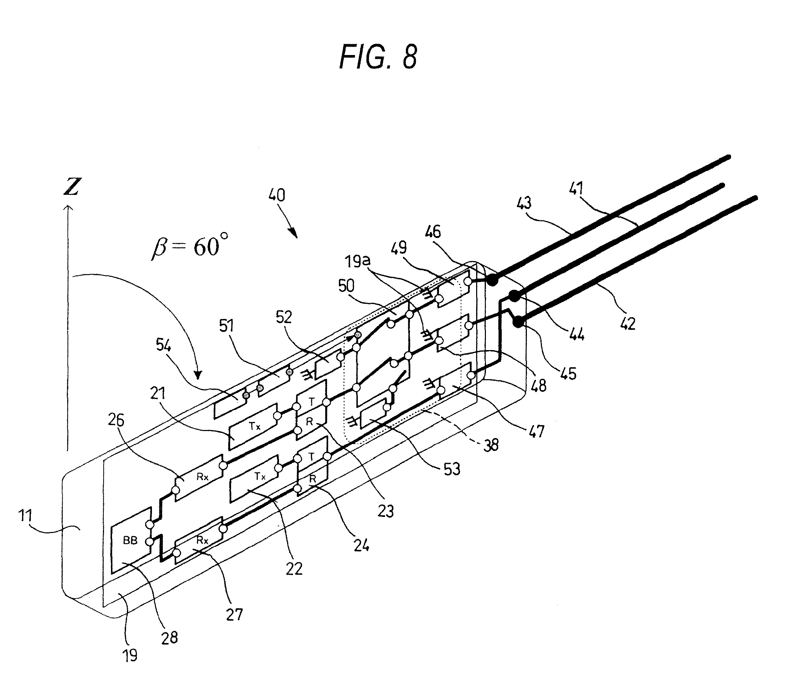

Next, in the case where the portable wireless device 40 is tilted as shown in Fig. 8 (i.e., the case where the device is tilted by β (60°) toward the -X direction from the Z-axis in the coordinate system shown in Fig. 6), the correlation coefficient between the first antenna element 41 and the third antenna element 43 is increased to 0.74, and the effect of high-speed and high-capacity communication is reduced.

However, the second embodiment has the configuration in which the element length of the first antenna element 41 is shortened by 0.05 wavelengths with respect to the half wavelength, and the element length of the third antenna element 43 is elongated by 0.05 wavelengths with respect to the half wavelength. As compared with a half-wavelength configuration, therefore, the correlation coefficient is reduced by about 0.1 or to 0.74, and low correlation is obtained.

Hereinafter, a cause of the phenomenon that the correlation coefficient is made higher in the case where the portable wireless device 40 is tilted as shown in Fig. 8 will be described.

In the case where the portable wireless device 40 is tilted, since it is assumed that an electromagnetic wave comes from a substantially horizontal direction (XY plane), the positional relationships of the first antenna element 41 and the third antenna element 43 from the far field are estimated to be identical with each other in the maximum gain direction (Y direction) of the first antenna element 41 and the third antenna element 43.

Namely, the differences in spatial position (phase differences) are substantially equal to each other, and the correlation property is made high.

By contrast, the correlation coefficient between the first antenna element 41 and the second antenna element 42 is 0.39, and low correlation is obtained.

In the portable wireless device 40, however, the element length L4 of the first antenna element 41 is shortened by 0.05 wavelengths with respect to the half wavelength, and the element length L5 of the second antenna element 42 is elongated by 0.05 wavelengths with respect to the half wavelength. As compared with a half-wavelength configuration, therefore, the correlation coefficient is reduced by about 0.1 or to 0.39, and low correlation is obtained.

Hereinafter, a cause of the phenomenon that the correlation coefficient is made lower in the case where the portable wireless device is tilted as shown in Fig. 8 will be described.

In the case where the portable wireless device 40 is tilted, since it is assumed that an electromagnetic wave comes from a substantially horizontal direction (XY plane), the positional relationships of the first antenna element 41 and the second antenna element 42 from the far field are estimated to be different from each other in the maximum gain direction (Y direction) of the first antenna element 41 and the second antenna element 42. Namely, the differences in spatial position (phase differences) are estimated to be different from each other, and the correlation property can be suppressed to be low.

In this case, therefore, the gravity sensor 54 which detects the tilt angle of the portable wireless device 40 detects the tilt in the -X direction, and sends the detection result to the controlling portion 51. On the basis of the detection result, the controlling portion 51 sends the control signal to the high-frequency switch 50.

Based on the control signal, the high-frequency switch 50 operates, so that the first shared transmitting/receiving unit 23 is connected to the second matching circuit 48 for the second antenna element 42, and the first terminating circuit 52 is connected to the third matching circuit 49 for the third antenna element 43.

In this case, when the impedance of the first terminating circuit 52 is set to 50 Ω, low correlation is obtained.

As described above, the high-frequency switch 50 is switched over, whereby the correlation coefficient between the first antenna element 41 and the second antenna element 42 is suppressed to be low or to 0.39. In the case of transmission, space multiplexing is performed by transmitting identical space-time coded signals from the first antenna element 41 and the second antenna element 42 in the same band.

In the case of reception, similarly, the first antenna element 41 and the second antenna element 42 receive signals, and information is extracted by separating the received signals. According to the configuration, the embodiment operates as wireless communication systems having low spatial correlation, whereby the transfer rate is improved, and high-capacity communication is enabled.

The tilt angle of the portable wireless device 40 is substantially equal to that in the operation state where, for example, the user 30 places the portable wireless device 40 in front of the chest 33 while the device is held by the hand 31 as shown in Fig. 5, and the user performs an e-mail operation, an internet connection, or a use of a video phone.

Namely, in the operation state, the tilt angle of the portable wireless device 40 is detected, and the first antenna element 41 and the second antenna element 42 are selected, whereby the correlation between the antennas is made low, the transfer rate is improved, and high-capacity communication is enabled.

As described above, according to the portable wireless device 40 of the second embodiment, in order to reduce the correlation property among the three antenna elements 41, 42, 43 placed in the portable wireless device 40, the element lengths L4, L5, L6 of the antenna elements 41, 42, 43 are adjusted so as to be slightly changed from that of a half-wavelength element, and the antenna elements 41, 42, 43 are selected in various states where the user 30 uses the portable wireless device 40, whereby the correlation coefficient among the antenna elements 41, 42, 43 can be reduced, and high-speed and high-capacity communication can be ensured.

In the second embodiment, when the antenna elements 41, 42, 43 and the transmitting/receiving circuits 21, 22, 21, 22 are further increased, the effect of high-speed and high-capacity communication can be further improved.

The second embodiment has been described with reference to the example in which the element length L4 of the first antenna element 41 is shortened by 0.05 wavelengths with respect to the half wavelength, and the element lengths L5, L6 of the second antenna element 42 and the third antenna element 43 are elongated by 0.05 wavelengths with respect to the half wavelength. The invention is not restricted to this. Also when the element length L4 of the first antenna element 41 is set to the half wavelength, and the element lengths L5, L6 of the second antenna element 42 and the third antenna element 43 are elongated by 0.05 wavelengths with respect to the half wavelength, it is possible to realize low correlation in a substantially same manner.

In addition, also in the case where the element length L4 of the first antenna element 41 is elongated by 0.05 wavelengths with respect to the half wavelength, and the element lengths L5, L6 of the second antenna element 42 and the third antenna element 43 are shortened by 0.05 wavelengths with respect to the half wavelength, it is possible to realize low correlation in a substantially same manner.

Moreover, the second embodiment has been described with reference to the example in which the element lengths L4, L5, L6 of the antenna elements 41, 42, 43 are changed by about 0.05 wavelengths with respect to the half wavelength. However, the invention is not restricted to this length. Any length may be used as far as the element length is adjusted so as to realize correlation lower than that of a half-wavelength element.

In the second embodiment, the antenna elements 41, 42, 43 are placed outside the case 11. However, the invention is not restricted to this. Also when the antenna elements are placed in positions which are inside the case 11, and which do not impair the radiation property, for example, in an end of the case 11, it is possible to attain the same effects.

In the second embodiment, as selecting means for selecting the antenna elements 41, 42, 43, the tilt of the portable wireless device 40 has been exemplarily described. However, the invention is not restricted to this selecting method. A method in which a combination of antennas of a higher throughput is selected may be employed.

(Third embodiment)

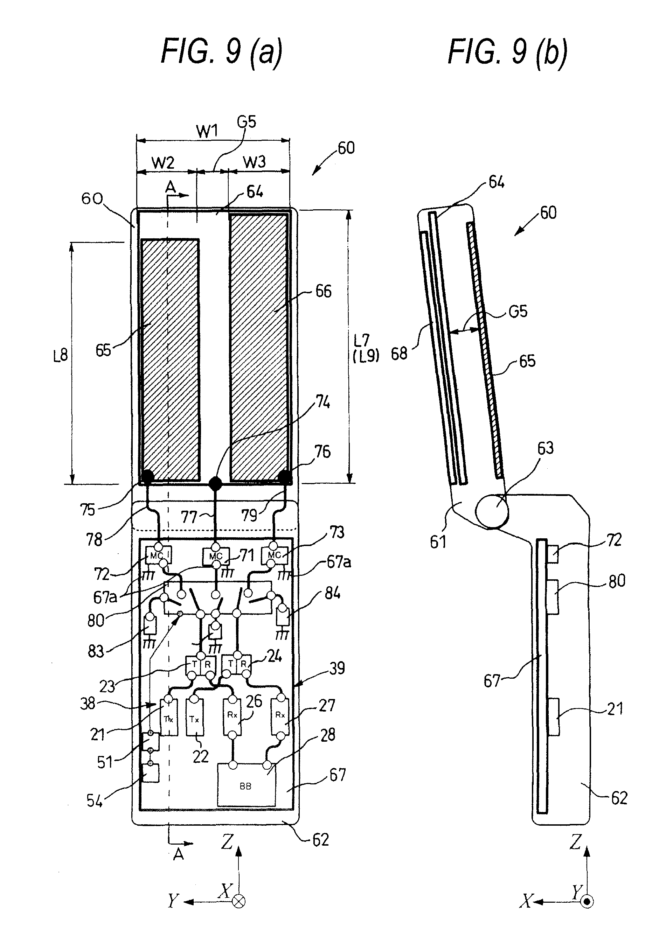

A portable wireless device 60 of the third embodiment will be described with reference to Figs. 9(a) and 9(b).

The portable wireless device 60 of the third embodiment shown in Figs. 9(a) and 9(b) comprises: an upper case 61 serving as a first case; a lower case 62 serving as a second case; a first plate-like conductor 64 serving as a first plate-like antenna element; a second plate-like conductor 65 serving as a second plate-like antenna element; a third plate-like conductor 66 serving as a third plate-like antenna element; a ground plate 67; and a display portion 68.

The upper case 61 and the lower case 62 are cases made of a resin which is an insulator, and usually formed into dimensions in which the length is 100 mm and the width is about 50 mm.

The upper case 61 and the lower case 62 are connected to each other so as to be swingable about a hinge portion 63, thereby forming a foldable structure.

The first plate-like conductor 64 is formed by a copper plate in which, for example, a conductor length L6 is 77 mm, and, at the set frequency of 2.15 GHz, slightly longer by about 0.05 wavelengths than the half wavelength of 70 mm, and a width W1 is about 45 mm. In the upper case 61, the conductor is placed along the face of the display portion 68 of the case.

The second plate-like conductor 65 is formed by a copper plate in which, for example, a conductor length L7 is 63 mm, and, at the set frequency of 2.15 GHz, slightly shorter by about 0.05 wavelengths than the half wavelength of 70 mm, and a width W2 is about 20 mm. In the upper case 61, the conductor is placed along the face opposite to that of the display portion 68 of the case.

The third plate-like conductor 66 is formed by a copper plate in which, for example, a conductor length L6 is 77 mm, and, at the set frequency of 2.15 GHz, slightly longer by about 0.05 wavelengths than the half wavelength of 70 mm, and a width W3 is about 20 mm. In the upper case 61, the conductor is placed along the face opposite to that of the display portion 68 of the case.

A gap G5 between the second plate-like conductor 65 and the third plate-like conductor 66 is placed as, for example, 5 mm. A gap G6 between the second plate-like conductor 65 and the third plate-like conductor 66, and the first plate-like conductor 64 is set to, for example, 5 mm.

The thicknesses of the first plate-like conductor 64, the second plate-like conductor 65, and the third plate-like conductor 66 are set to, for example, about 0.1 mm. Even when the thickness of the upper case 61 is as small as, for example, about 7 mm, therefore, the first plate-like conductor 64, the second plate-like conductor 65, and the third plate-like conductor 66 are placed inside the upper case 61 so as not to structurally interfere with other components such as a display element.

The ground plate 67 is a conductor plate having, for example, a length of 90 mm and a width of 45 mm, and a ground pattern 67a of a circuit disposed inside the lower case 62 is usually used.

Above the ground plate 67, the ground pattern 67a functioning as the ground potential of the circuit is formed over a substantially whole face. The ground potentials of a first matching circuit 71, a second matching circuit 72, and a third matching circuit 73 are grounded to the ground pattern 67a on the ground plate 67.

A first feeding point 74, a second feeding point 75, and a third feeding point 76 are disposed in lower portions of the first plate-like conductor 64, the second plate-like conductor 65, and the third plate-like conductor 66, respectively.

The first feeding point 74, the second feeding point 75, and the third feeding point 76 are electrically connected to the first matching circuit 71, the second matching circuit 72, and the third matching circuit 73 by a first feeder line 77, a second feeder line 78, and a third feeder line 79, respectively.

As the first feeder line 77, the second feeder line 78, and the third feeder line 79, a flexible wire member which can be freely bent is used, so that the upper case 60 is swingable about the hinge portion 63.

The first matching circuit 71, the second matching circuit 72, and the third matching circuit 73 exert a function of matching the impedances of the first plate-like conductor 64, the second plate-like conductor 65, and the third plate-like conductor 66 to the circuit impedance (usually, 50 Ω).

Identical space-time coded signals are amplified by respective first and second transmitting circuits 21, 22. The first transmitting circuit 21 feeds the first matching circuit 71 or the second matching circuit 72 via the first shared transmitting/receiving unit 23 and a high-frequency switch 80.

The second transmitting circuit 22 feeds the first matching circuit 71 or the third matching circuit 73 via the second shared transmitting/receiving unit 24 and the high-frequency switch 80.

When the first shared transmitting/receiving unit 23 is to be connected to the first matching circuit 71, for example, the second shared transmitting/receiving unit 24 is not connected to the first matching circuit 71, but to the third matching circuit 73.

Namely, the high-frequency switch 80 is controlled so that the first shared transmitting/receiving unit 23 and the second shared transmitting/receiving unit 24 are not simultaneously connected to the first matching circuit 71.

The high-frequency switch 80 is configured by, for example, an FET or a PIN diode, and, in response to the control signal from the controlling portion 51, selects one set of the first matching circuit 71 and the second matching circuit 72, the second matching circuit 72 and the third matching circuit 73, and the first matching circuit 71 and the third matching circuit 73, as a set to be fed.

One of the first matching circuit 71, the second matching circuit 72, and the third matching circuit 73 which is not fed is connected to a first terminating circuit 82, a second terminating circuit 83, or a third terminating circuit 84.

The first terminating circuit 82, the second terminating circuit 83, and the third terminating circuit 84 have a fixed impedance, and are configured by a specific reactance element or resistor, and the like, and grounded to the ground pattern 67a on the ground plate 67.

The above-described configuration functions as a dipole antenna in which the first plate-like conductor 64, the second plate-like conductor 65, the third plate-like conductor 66, and the ground plate 67 are fed.

The conductor lengths L7, L8, L9 of the first plate-like conductor 64, the second plate-like conductor 65, and the third plate-like conductor 66 are substantially equal to the half wavelength, and hence the respective radiation properties are substantially omnidirectional in the horizontal plane (XY plane).

Next, the antenna operation of the portable wireless device 60 of the third embodiment will be described.

First, description will be made on the case where the portable wireless device 60 is placed so that the tip ends of the first plate-like conductor 64, the second plate-like conductor 65, and the third plate-like conductor 66 of the portable wireless device 60 are upward directed in the Z direction as shown in Fig. 9.

The gap G6 between the first plate-like conductor 64 and the second plate-like conductor 65 is 5 mm. In the case where the plate-like conductors have the half wavelength, for example, the correlation coefficient is 0.15. By contrast, in the portable wireless device 60 of the third embodiment, the conductor length L7 of the first plate-like conductor 64 is elongated slightly or by 0.05 wavelengths with respect to the half wavelength, and the conductor length L8 of the second plate-like conductor 65 is shortened slightly or by 0.05 wavelengths with respect to the half wavelength.

As compared with a half-wavelength configuration, therefore, the correlation coefficient is reduced by about 0.1, and the correlation coefficient between the first plate-like conductor 64 and the second plate-like conductor 65 is 0.05, and low correlation can be further realized.

By contrast, both the conductor lengths L7, L9 of the first plate-like conductor 64 and the third plate-like conductor 66 are elongated slightly or by 0.05 wavelengths from the half wavelength. Therefore, the correlation coefficient is substantially equal to the case of a half-wavelength configuration, and the correlation coefficient between the first plate-like conductor 64 and the second plate-like conductor 65 is 0.14.

The gap G6 between the second plate-like conductor 65 and the third plate-like conductor 66 is 5 mm. In the case where the plate-like conductors have the half wavelength, for example, the correlation coefficient is 0.27. By contrast, in the portable wireless device 60 of the third embodiment, the conductor length L8 of the second plate-like conductor 65 is shorter slightly or by 0.05 wavelengths than the half wavelength, and the conductor length L9 of the third plate-like conductor 66 is longer slightly or by 0.05 wavelengths than the half wavelength.

As compared with a half-wavelength configuration, therefore, the correlation coefficient is reduced by about 0.1, and the correlation coefficient between the second plate-like conductor 65 and the third plate-like conductor 66 is 0.15, and the correlation coefficient is reduced. However, the correlation coefficient is higher by about 0.1 than that between the first plate-like conductor 64 and the second plate-like conductor 65.

In this case, therefore, the combination of the first plate-like conductor 64 and the second plate-like conductor 65 in which the lowest correlation can be realized is selected.

Based on a detection result of the gravity sensor 54 which detects the tilt angle of the portable wireless device 60, it is determined that the tilt angle is 0°, and the detection result is sent to the controlling portion 51. On the basis of the detection result, the controlling portion 51 sends the control signal to the high-frequency switch 80.

Based on the control signal, the high-frequency switch 80 operates, so that the first shared transmitting/receiving unit 23 is connected to the second matching circuit 72 for the second plate-like conductor 65, the second shared transmitting/receiving unit 24 is connected to the first matching circuit 71 for the first plate-like conductor 64, and the third terminating circuit 84 is connected to the third matching circuit 73 for the third plate-like conductor 66.

In this case, for example, the impedance of the third terminating circuit 84 is set to 50 Ω.

As described above, the high-frequency switch 80 is switched over, and the conductor lengths L7, L8, L9 of the plate-like conductors 64, 65, 66 are slightly changed from a half-wavelength element, whereby the correlation coefficient between the first plate-like conductor 64 and the second plate-like conductor 65 is suppressed to be low or to 0.05.

In the case of transmission, space multiplexing is performed by transmitting identical space-time coded signals from the first plate-like conductor 64 and the second plate-like conductor 65 in the same band.

In the case of reception, similarly, the first plate-like conductor 64 and the second plate-like conductor 65 receive signals, and information is extracted by separating the received signals.

According to the configuration, the embodiment operates as wireless communication systems having low spatial correlation, whereby the transfer rate is improved, and high-capacity communication is enabled.

Next, in the case where the portable wireless device 60 is tilted as shown in Fig. 7 (i.e., the case where the device is tilted by α (60°) toward the Y direction from the Z-axis in the coordinate system shown in Fig. 9), the correlation coefficient between the second plate-like conductor 65 and the third plate-like conductor 66 is 0.20 or slightly higher than the case where the device is not tilted. Therefore, the effect of high-speed and high-capacity communication is reduced as compared with the case where the device is not tilted.

In the portable wireless device 60 of the third embodiment, the conductor length L8 of the second plate-like conductor 65 is shortened by 0.05 wavelengths with respect to the half wavelength, and the conductor length L9 of the third plate-like conductor 66 is elongated by 0.05 wavelengths with respect to the half wavelength. As compared with a half-wavelength configuration, therefore, the correlation coefficient is reduced by about 0.2 or to 0.20, and low correlation is obtained.

Hereinafter, a cause of the phenomenon that the correlation coefficient is made higher in the case where the portable wireless device 60 is tilted will be described.

In the case where the portable wireless device 60 is tilted, since it is assumed that an electromagnetic wave comes from a substantially horizontal direction (XY plane), the positional relationships of the second plate-like conductor 65 and the third plate-like conductor 66 from the far field are estimated to be identical with each other in the maximum gain direction (X direction) of the second plate-like conductor 65 and the third plate-like conductor 66.

Namely, the differences in spatial position (phase differences) are substantially equal to each other, and the correlation property is made higher.

In the first plate-like conductor 64 and the second plate-like conductor 65, in the case where the conductor lengths of the plate-like conductors are the half wavelength, for example, the correlation coefficient is 0.15. By contrast, in the portable wireless device 60 of the third embodiment, the conductor length L7 of the first plate-like conductor 64 is slightly longer by 0.05 wavelengths than the half wavelength, and the conductor length L8 of the second plate-like conductor 65 is slightly shorter by 0.05 wavelengths than the half wavelength.

As compared with a half-wavelength configuration, therefore, the correlation coefficient is reduced by about 0.07, and the correlation coefficient between the first plate-like conductor 64 and the second plate-like conductor 65 is 0.08, and low correlation can be further realized.

By contrast, both the conductor lengths L7, L9 of the first plate-like conductor 64 and the third plate-like conductor 66 are slightly longer by 0.05 wavelengths than the half wavelength. Therefore, the correlation coefficient is substantially equal to the case of a half-wavelength configuration, and the correlation coefficient between the first plate-like conductor 64 and the third plate-like conductor 66 is 0.15.

Hereinafter, a cause of the phenomenon that the correlation coefficient is made lower in the case where the portable wireless device 60 is tilted will be described.

In the case where the portable wireless device 60 is tilted, since it is assumed that an electromagnetic wave comes from a substantially horizontal direction (XY plane), the positional relationships of the first plate-like conductor 64 and the second plate-like conductor 65, and the first plate-like conductor 64 and the third plate-like conductor 66 from the far field are estimated to be different from each other in the maximum gain direction (X direction) of the first plate-like conductor 64 and the second plate-like conductor 65, and the first plate-like conductor 64 and the third plate-like conductor 66.

Namely, the differences in spatial position (phase differences) are estimated to be different from each other, and the correlation property can be suppressed to be low.

In this case, the combination of the first plate-like conductor 64 and the second plate-like conductor 65 in which the conductor lengths are different from each other, and the lowest correlation can be realized is selected.

Therefore, the gravity sensor 54 which detects the tilt angle of the portable wireless device 60 detects the tilt in the Y direction, and sends the detection result to the controlling portion 51. On the basis of the detection result, the controlling portion 51 sends the control signal to the high-frequency switch 80.

Based on the control signal, the high-frequency switch 80 operates, so that the second shared transmitting/receiving unit 24 is connected to the first matching circuit 71 for the first plate-like conductor 64, the first shared transmitting/receiving unit 23 is connected to the second matching circuit 72 for the second plate-like conductor 65, and the third terminating circuit 84 is connected to the third matching circuit 73 for the third plate-like conductor 66.

In this case, for example, the impedance of the third terminating circuit 84 is set to 50 $\Omega$.

In this way, the high-frequency switch 80 is switched over, and the conductor lengths L7, L8, L9 of the plate-like conductors 64, 65, 66 are slightly changed from a half-wavelength element, whereby the correlation coefficient between the first plate-like conductor 64 and the second plate-like conductor 65 is suppressed to be low or to 0.08.

In the case of transmission, space multiplexing is performed by transmitting identical space-time coded signals from the first plate-like conductor 64 and the second plate-like conductor 65 in the same band.

In the case of reception, similarly, the first plate-like conductor 64 and the second plate-like conductor 65 receive signals, and information is extracted by separating the received signals.

According to the configuration, the embodiment operates as wireless communication systems having low spatial correlation, whereby the transfer rate is improved, and high-capacity communication is enabled.

The tilt angle of the portable wireless device 60 is substantially equal to that in the communication state where, for example, the user 30 uses the portable wireless device 60 while the device is held by the hand 31 in proximity to the ear 32 as shown in Fig. 4.

In the communication state, the case where the device is held by the right hand, and that where the device is held by the left hand are assumed.

In order that the reduction of the antenna radiation efficiency due to the influence of the human body is reduced by the radiation conductors 64, 65, 66, it is desirable to separate the radiation conductors 64, 65, 66 from the human body.

In the communication state where the device is held by the right hand, for example, the high-frequency switch 80 selects the third plate-like conductor 66 which is at a position further separated from the shoulder direction of the human body, and, since the device is tilted by 60 degrees in the Y direction, selects the first plate-like conductor 64.

Therefore, the antenna radiation efficiency can be improved, and low correlation can be realized. Hence, the transfer rate is improved, and high-capacity communication is enabled.

In the communication state where the device is held by the left hand, for example, the high-frequency switch 80 selects the second plate-like conductor 65 which is at a position further separated from the shoulder direction of the human body, and, since the device is tilted by 60 degrees in the Y direction, selects the first plate-like conductor 64.

Therefore, the antenna radiation efficiency can be improved, and low correlation can be realized. Hence, the transfer rate is improved, and high-capacity communication is enabled.

Namely, also in the communication state, the tilt angle of the portable wireless device is detected, and a combination of the plate-like conductors 64, 65, 66 is selected, whereby the correlation between the antennas is made low, the transfer rate is improved, and high-capacity communication is enabled.

Next, in the case where the portable wireless device 60 is tilted as shown in Fig. 8 (i.e., the case where the device is tilted by β (60˚) toward the -X direction from the Z-axis in the coordinate system shown in Fig. 9), the correlation coefficient between the first plate-like conductor 64 and the second plate-like conductor 65 is 0.20 or slightly higher than the case where the device is not tilted, and the effect of high-speed and high-capacity communication is reduced as compared with the case where the device is not tilted.

In the portable wireless device 60 of the third embodiment, however, the conductor length L8 of the second plate-like conductor 65 is shortened by 0.05 wavelengths with respect to the half wavelength, and the conductor length L9 of the third plate-like conductor 66 is elongated by 0.05 wavelengths with respect to the half wavelength. As compared with a half-wavelength configuration, therefore, the correlation coefficient is reduced by about 0.1 or to 0.20, and low correlation is obtained.

By contrast, both the conductor lengths L7, L9 of the first plate-like conductor 64 and the third plate-like conductor 66 are slightly longer by 0.05 wavelengths than the half wavelength. Therefore, the correlation coefficient is substantially equal to a half-wavelength configuration, and the correlation coefficient between the first plate-like conductor 64 and the third plate-like conductor 66 is 0.30.

In the second plate-like conductor 65 and the third plate-like conductor 66, for example, the correlation coefficient is 0.22 in the case where the conductor lengths L8, L9 are the half wavelength. By contrast, in the portable wireless device 60 of the third embodiment, the conductor length L8 of the second plate-like conductor 65 is slightly shorter by 0.05 wavelengths than the half wavelength, and the conductor length L9 of the third plate-like conductor 66 is slightly longer by 0.05 wavelengths than the half wavelength. As compared with a half-wavelength configuration, therefore, the correlation coefficient is reduced by about 0.1, and the correlation coefficient between the second plate-like conductor 65 and the third plate-like conductor 66 is 0.12, and low correlation can be further realized.

Hereinafter, a cause of the phenomenon that the correlation coefficient is made lower in the case where the portable wireless device 60 is tilted will be described.

In the case where the portable wireless device 60 is tilted, since it is assumed that an electromagnetic wave comes from a substantially horizontal direction (XY plane), the positional relationships of the second plate-like conductor 65 and the third plate-like conductor 66 from the far field are estimated to be different from each other in the maximum gain direction (Y direction) of the second plate-like conductor 65 and the third plate-like conductor 66.

Namely, the differences in spatial position (phase differences) are estimated to be different from each other, and the correlation property can be suppressed to be low.

In this case, the gravity sensor 54 which detects the tilt angle of the portable wireless device 60 detects the tilt in the -X direction, and sends the detection result to the controlling portion 51. On the basis of the detection result, the controlling portion 51 sends the control signal to the high-frequency switch 80.

Based on the control signal, the high-frequency switch 80 operates, so that the first shared transmitting/receiving unit 23 is connected to the second matching circuit 72 for the second plate-like conductor 65, the second shared transmitting/receiving unit 24 is connected to the third matching circuit 73 for the third plate-like conductor 66, and the first terminating circuit 82 is connected to the first matching circuit 71 for the plate-like element 40.

In this case, for example, the impedance of the first terminating circuit 82 is set to 50 Ω.

As described above, the high-frequency switch 80 is switched over, and the conductor lengths L7, L8, L9 of the plate-like conductors 64, 65, 66 are slightly changed from a half-wavelength element, whereby the correlation coefficient between the second plate-like conductor 65 and the third plate-like conductor 66 is suppressed to be low or to 0.12.

In the case of transmission, space multiplexing is performed by transmitting identical space-time coded signals from the second plate-like conductor 65 and the third plate-like conductor 66 in the same band.

In the case of reception, similarly, the second plate-like conductor 65 and the third plate-like conductor 66 receive signals, and information is extracted by separating the received signals.

According to the configuration, the embodiment operates as wireless communication systems having low spatial correlation, whereby the transfer rate is improved, and high-capacity communication is enabled.

The tilt angle of the portable wireless device 60 is substantially equal to that in the operation state where, for example, the user 30 places the portable wireless device 60 in front of the chest 33 while the device is held by the hand 31 as shown in Fig. 5, and the user performs an e-mail operation, an internet connection, or a use of a video phone.

Namely, in the operation state, the tilt angle of the portable wireless device 60 is detected, and the second plate-like conductor 65 and the third plate-like conductor 66 are selected, whereby low correlation between the antennas can be realized, the transfer rate is improved, and high-capacity communication is enabled.

As described above, according to the portable wireless device 60 of the third embodiment, the first plate-like conductor 64 is placed on the face of the display portion 68 of the portable wireless device 60, the two second and third plate-like conductors 65, 66 are placed in parallel to the face opposed to the display portion 68, antenna elements are selected in various states where the user 30 uses the portable wireless device 60, and the conductor lengths L7, L8, L9 are slightly changed from a half-wavelength element in order to reduce the correlation property among the three plate-like conductors 64, 65, 66, whereby the correlation coefficient between the antennas can be reduced, and high-speed and high-capacity communication can be ensured.

In the third embodiment, the conductor length L8 of the second plate-like conductor 65 is set to be shorter by 0.05 wavelengths than the half wavelength, and the conductor lengths L7, L9 of the first plate-like conductor 64 and the third plate-like conductor 66 are set to be longer by 0.05 wavelengths than the half wavelength. However, the invention is not restricted to this. When the configuration indicated by O in the matrix table of Table 1 is employed, the correlation coefficient between the antennas can be reduced, and high-speed and high-capacity communication can be ensured in various states where the user 30 uses the portable wireless device 60.

[Table 1]

| | State where portable wireless device is not tilted<br>Selection of plate-like conductor<br>65 - 65<br>64 - 65<br>64 - 66 | State where portable wireless device is tilted as shown in Fig. 7<br>Selection of plate-like conductor<br>64 - 65<br>64 - 66 | State where portable wireless device is tilted as shown in Fig. 8<br>Selection of plate-like conductor<br>65 - 67 |
|---|---|---|---|
| Plate-like conductor 64 0.55$\lambda$<br>Plate-like conductor 65 0.45$\lambda$<br>Plate-like conductor 66 0.5$\lambda$<br>(65 and 66 are interchangeable) | ○ | ○ | ○ |
| Plate-like conductor 64 0.55$\lambda$<br>Plate-like conductor 65 0.5$\lambda$<br>Plate-like conductor 66 0.55$\lambda$<br>(65 and 66 are interchangeable) | ○ | ○ | ○ |
| Plate-like conductor 64 0.5$\lambda$<br>Plate-like conductor 65 0.45$\lambda$.<br>Plate-like conductor 66 0.55$\lambda$<br>(65 and 66 are interchangeable) | ○ | ○ | ○ |
| Plate-like conductor 64 0.45$\lambda$<br>Plate-like conductor 65 0.45$\lambda$<br>Plate-like conductor 66 0.55$\lambda$<br>(65 and 66 are interchangeable) | ○ | × | ○ |

Namely, Table 1 shows a part of data in which, in the case where combinations of the conductor lengths of the plate-like conductors 64, 65, 66 are changed, the correlation coefficient when selecting the plate-like conductors 64, 65, 66 in each tilted state of the portable telephone (portable wireless device) 60 is compared with the case where the conductor lengths of the plate-like conductors 64, 65, 66 are the half wavelength.

Table 1 shows that, when O, correlation is lower than the case where the conductor length is the half wavelength, and, when x, correlation is higher than the case where the conductor length is the half wavelength.

As shown in Table 1, for example, even in the case where the conductor length L8 of the second plate-like conductor 65 is the half wavelength, and the conductor lengths L7, L9 of the first plate-like conductor 64 and the third plate-like conductor 66 are longer by 0.05 wavelengths than the half wavelength, it is possible to realize low correlation, or even in the case where the conductor length of the second plate-like conductor 65 is shorter by 0.05 wavelengths than the half wavelength, the conductor length L7 of the first plate-like conductor 64 is the half wavelength, and the conductor length L9 of the third plate-like conductor 66 is elongated by 0.05 wavelengths from the half wavelength, it is possible to realize low correlation.

In the case where the conductor lengths L8, L7 of the second plate-like conductor 65 and the first plate-like conductor 64 are shorter by 0.05 wavelengths than the half wavelength, and the conductor length L9 of the third plate-like conductor 66 is elongated by 0.05 wavelengths from the half wavelength, however, correlation is higher under certain tilt conditions as compared with the case of the half wavelength. Therefore, this case is inadequate.

The combinations are not limited to those of Table 1. Any combination may be employed as far as correlation is low in a state where the portable wireless device 60 is used.

In the third embodiment, the plate-like conductors 64, 65, 66 are changed by about 0.05 wavelengths with respect to the half wavelength. However, the length to be changed is not restricted to this. Any length may be used as far as the length is adjusted so as to realize correlation lower than that of a half-wavelength element.

In place of the first plate-like conductor 64, a metal frame which constitutes a part of the upper case 61, a circuit board which is placed inside the upper case 61, or a plate-like conductor element dedicated to the antenna element may be used. In this case, similar effects are attained.

The impedances of the terminating circuits 82, 83, 84 are set to 50 Ω. However, the invention is not restricted to this. In the case where the fed antennas are not affected, such as the case where the reactance component is -50 Ω, an effect that the correlation coefficient is improved by about 0.05 is attained, and the effect of high-speed and high-capacity communication is improved.

In the third embodiment, the example in which, as selecting means for selecting a combination of the plate-like conductors 64, 65, 66, determination is conducted on the basis of the tilt of the portable wireless device 60 has been described. However, the invention is not restricted to this selecting method. A method in which a combination of antennas of a higher throughput is selected may be employed.

The present application is based on Japanese Patent Application (No. 2005-014114) filed January 21, 2005, and its disclosure is incorporated herein by reference.

<Industrial Applicability>

According to the portable wireless device of the invention, in various states where the user uses the portable wireless device, the correlation coefficient between the antennas is reduced, and high-speed and high-capacity communication is ensured. Therefore, the invention is useful in improving the performance of a portable wireless device.

**Claims**

1. A portable wireless device, comprising:

   a first antenna element and a second antenna element provided in parallel to each other with a predetermined gap;

   wherein an element length of said first antenna element is set to be slightly different from a half wavelength;
   an element length of said second antenna element is set to be slightly different from the element length of said first antenna element;
   said first antenna element and a first wireless circuit portion connected to said element are set as a first communication system;
   said second antenna element and a second wireless circuit portion connected to said element are set as a second communication system; and
   said communication systems operate as wireless communication systems having low spatial correlation, respectively.

2. The portable wireless device according to claim 1, wherein said first antenna element and said second antenna element are fed unbalancedly with respect to a ground potential of said case.

3. The portable wireless device according to claim 1 or 2,
wherein the element length of one of said first antenna element and said second antenna element is made slightly longer than the half wavelength, and
the element length of the other antenna element is made slightly shorter than the half wavelength.

4. A portable wireless device, comprising:

a first antenna element, a second antenna element, and a third antenna element in a case,

wherein an element length of said first antenna element is set to be slightly different from a half wavelength;
wherein element lengths of said second antenna element and said third antenna element are set to be slightly different from the element length of said first antenna element,
said first antenna element and said second antenna element are placed in parallel to each other with a predetermined gap in a thickness direction of said case;
said first antenna element and said third antenna element are placed in parallel to each other with a predetermined gap in a width direction of said case;
said first antenna element and a first wireless circuit portion connected to said element are set as a first communication system;
said device comprises a selecting section for selecting one of said second antenna element and said third antenna element, and connecting the selected element to a second wireless circuit portion;
said device comprises a controlling section for controlling said selecting section;
the selected one antenna element and said second wireless circuit portion connected to said element are set as a second communication system; and
said first communication system and said second communication system operate as wireless communication systems having low spatial correlation, respectively.

5. The portable wireless device according to claim 4, wherein the element length of one of said first antenna element, and said second antenna element and said third antenna element is made slightly longer than the half wavelength, and the element length of the other antenna element is made slightly shorter than the half wavelength.

6. A portable wireless device wherein
a first case and a second case are swingably coupled to each other by a hinge portion,
said device comprises a first plate-like conductor along a long case side of said first case,
said device comprises a second plate-like conductor and a third plate-like conductor along a long side of said first case while being separated from said first plate-like conductor in said first case,
a conductor length of said first plate-like conductor is set to be slightly different from a half wavelength,
a conductor length of said second plate-like conductor is set to be slightly different from the conductor length of said first plate-like conductor,
a conductor length of said third plate-like conductor is set to be slightly different from the conductor length of said second plate-like conductor,
said device comprises a ground pattern on a circuit board disposed in said second case,
said device comprises a selecting section for selecting one set of said first plate-like conductor and said second plate-like conductor, said first plate-like conductor and said third plate-like conductor, and said second plate-like conductor and said third plate-like conductor,
said device comprises a controlling section for controlling said selecting section,
one plate-like conductor of the selected set, and a first wireless circuit portion connected to said conductor are set as a first communication system, another plate-like conductor and a second wireless circuit portion connected to said conductor are set as a second communication system, and said communication systems operate as wireless communication systems having low spatial correlation, respectively.

7. The portable wireless device according to claim 6,
wherein the conductor length of one of said first plate-like conductor and said second plate-like conductor, and said third plate-like conductor is set to be slightly longer than the half wavelength, and

the conductor length of the other conductor is set to be slightly shorter than the half wavelength.

8. The portable wireless device according to claim 4, 5, 6, or 7, wherein, as said controlling section for controlling said selecting section, said device comprises a tilt detecting section for detecting a tilt angle of said portable wireless device, and said selecting section is controlled in accordance with a detection result of said tilt detecting section.

9. The portable wireless device according to claim 4, 5, 6, or 7, wherein said plate-like conductor which is not selected by said selecting section is short-circuited to said circuit board via a circuit having a specific reactance component.

# FIG. 1

## FIG. 2

*FIG. 3 (a)*

*FIG. 3 (b)*

FIG. 4

12(101)

$\alpha = 60°$ **Z**

13(102)

10(100)

32

30

31

FIG. 5

30

**Z**

33

$\beta = 60°$

31

10(100)

# FIG. 6

FIG. 7

FIG. 8

## FIG. 9 (a)

## FIG. 9 (b)

**INTERNATIONAL SEARCH REPORT**

| International application No. |
| --- |
| PCT/JP2005/018775 |

A.   CLASSIFICATION OF SUBJECT MATTER
*H01Q1/24*(2006.01), *H01Q3/44*(2006.01), *H01Q9/38*(2006.01), *H01Q9/40*
(2006.01), *H01Q19/26*(2006.01)

According to International Patent Classification (IPC) or to both national classification and IPC

B.   FIELDS SEARCHED

Minimum documentation searched (classification system followed by classification symbols)
*H01Q1/24*(2006.01), *H01Q3/44*(2006.01), *H01Q9/38*(2006.01), *H01Q9/40*
(2006.01), *H01Q19/26*(2006.01)

Documentation searched other than minimum documentation to the extent that such documents are included in the fields searched
Jitsuyo Shinan Koho          1922-1996    Jitsuyo Shinan Toroku Koho     1996-2005
Kokai Jitsuyo Shinan Koho    1971-2005    Toroku Jitsuyo Shinan Koho     1994-2005

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2004-96303 A  (Kyocera Corp.),<br>25 March, 2004 (25.03.04),<br>Fig. 1<br>(Family: none) | 1-3<br>4-9 |
| Y | JP 2001-102844 A  (Toshiba Corp.),<br>13 April, 2001 (13.04.01),<br>Full text; all drawings<br>(Family: none) | 4-9 |
| Y | JP 2004-242179 A  (Mitsubishi Electric Corp.),<br>26 August, 2004 (26.08.04),<br>Par. Nos. [0027] to [0042]; Figs. 7, 9<br>(Family: none) | 8 |

| ☒ | Further documents are listed in the continuation of Box C. | ☐ | See patent family annex. |
| --- | --- | --- | --- |

| | |
| --- | --- |
| * Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>   05 December, 2005 (05.12.05) | Date of mailing of the international search report<br>   20 December, 2005 (20.12.05) |
| --- | --- |
| Name and mailing address of the ISA/<br>   Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2005/018775 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 9-289483 A  (NEC Saitama, Ltd.), 04 November, 1997 (04.11.97), Full text; all drawings & GB 2312596 A          & GB 9708177 A0 | 9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3280625 A
- JP 9135120 A
- JP 2001102844 A

**Non-patent literature cited in the description**

- *Transactions of the Institute of Electronics, Information and Communication Engineers,* vol. J73-B-11 (12), 883-895